# EUROPEAN PATENT APPLICATION

(11) **EP 1 375 864 A2**
(43) Date of publication of application: **02.01.2004**
(21) Application number: 03254011.4
(22) Date of filing: 25.06.2003
(51) Int. Cl.: F02C 3/16, F02K 7/075

(54) **Method and apparatus for lifting and propelling rotorcraft**

(30) Priority: 27.06.2002 US 184240
(71) Applicant: GENERAL ELECTRIC COMPANY, Schenectady, NY 12345 (US)
(72) Inventor: Leyva, Ivett Alejandra, Niskayuna, New York 12309 (US); Robic, Bernard Francois, Niskayuna, New York 12309 (US); Dean, Anthony John, Scotia, New York 12302 (US); Butler, Lawrence, Cincinnati, Ohio 45241 (US)
(74) Representative: Pedder, James Cuthbert

(57) **Abstract**

An apparatus (100) for lifting and propelling a rotorcraft, the apparatus (100) comprising: a rotor hub (110) adapted for applying lift and propulsive forces to the rotorcraft; a plurality of rotor blades (120) mechanically coupled to the rotor hub (110) to form a rotor assembly and adapted for generating the lift and propulsive forces; and a plurality of pulse detonation engines (140) adapted for impulsively detonating a plurality of fuel/air mixtures to generate thrust forces and applying the thrust forces to the rotor assembly.

## Description

The present invention relates generally to the field of lifting and propelling rotorcraft and specifically to the use of pulse detonation engines to provide rotor torque and propulsion.

Conventional rotor drive trains for rotorcraft typically comprise a prime mover and a rotor transmission. The prime mover typically comprises a gas turbine engine, while the rotor transmission typically comprises a gear box and possibly a right-angle drive.

The use of one or more pulse detonation engines (PDEs) as prime movers provides numerous potential advantages over conventional rotor drive train designs. In contrast with the gas turbine, the simpler design, higher pressure rise, and superior thermodynamic efficiency of the PDE presents an opportunity to reduce prime mover weight and complexity. Furthermore, mounting the PDEs directly on the rotor presents an opportunity to reduce or eliminate transmission weight and complexity.

The opportunities described above are addressed, in one embodiment of the present invention, by an apparatus for lifting and propelling a rotorcraft, the apparatus comprising: a rotor hub adapted for applying lift and propulsive forces to the rotorcraft; a plurality of rotor blades mechanically coupled to the rotor hub to form a rotor assembly; and a plurality of pulse detonation engines adapted for impulsively detonating a plurality of fuel/air mixtures to generate thrust forces and applying the thrust forces to the rotor assembly.

The invention will now be described in greater detail, by way of example, with reference to the drawings, in which:-
Figure 1 illustrates a perspective drawing of a rotor assembly.
Figure 2 illustrates a perspective drawing of an apparatus for lifting and propelling a rotorcraft in accordance with one embodiment of the present invention.
Figure 3 illustrates a perspective drawing of an apparatus for lifting and propelling a rotorcraft in accordance with a more detailed embodiment of the embodiment illustrated in Figure 2.
Figure 4 illustrates a perspective drawing of an apparatus for lifting and propelling a rotorcraft in accordance with another more detailed embodiment of the embodiment illustrated in Figure 2.
Figure 5 illustrates a perspective drawing of an apparatus for lifting and propelling a rotorcraft in accordance with a still more detailed embodiment of the embodiment illustrated in Figure 4.
Figure 6 illustrates a perspective drawing of a rotorcraft in accordance with another embodiment of the present invention.

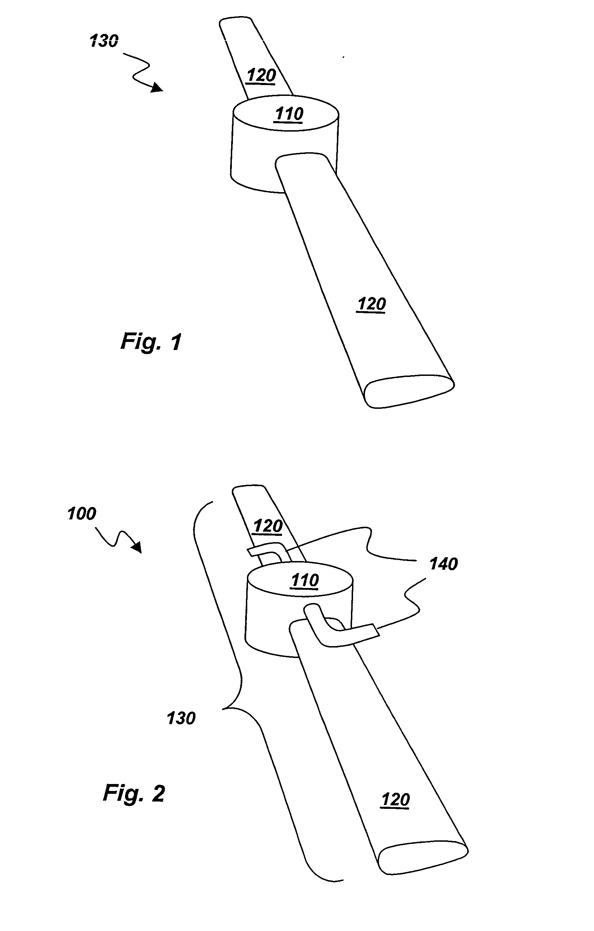

Figure 1 illustrates a perspective drawing of a rotor assembly 130 comprising a rotor hub 110 and a plurality of rotor blades 120 mechanically coupled to rotor hub 110. In accordance with one embodiment of the present invention, Figure 2 illustrates a perspective drawing of an apparatus 100 for lifting and propelling a rotorcraft, the apparatus 100 comprising a rotor assembly 130 and a plurality of pulse detonation engines 140. In operation, rotor hub 110 applies lift and propulsive forces to the rotorcraft; rotor blades 120 generate the lift and propulsive forces; and pulse detonation engines 140 impulsively detonate a plurality of fuel/air mixtures to generate thrust forces and apply the thrust forces to rotor assembly 130. In some embodiments, the thrust forces are managed so as to produce only a torque about a rotation axis of rotor assembly 130 with no net force. In other embodiments, however, the thrust forces are modulated as a function of a rotation angle of rotor assembly 130 to produce a torque and a non-zero net force as an aid to propulsion.

As used herein, a "pulse detonation engine" is understood to mean any device or system which produces both a pressure rise and velocity increase from a series of repeating detonations or quasi-detonations within the device. A "quasi-detonation" is a combustion process which produces a pressure rise and velocity increase higher than the pressure rise and velocity increase
produced by a deflagration wave. Typical embodiments of PDEs comprise a means of igniting a fuel/air mixture, and a detonation chamber in which pressure wave fronts initiated by the ignition process coalesce to produce a detonation wave. The geometry of the detonation chamber is such that the pressure rise of the detonation wave expels combustion products out the PDE exhaust to produce a thrust force. As used herein, "impulsively detonating" refers to a process of repeating detonations or quasi-detonations wherein each detonation or quasi-detonation is initiated either by external ignition (for example, without limitation, spark discharge or laser pulse) or by gas dynamic processes (for example, without limitation, shock initiation or autoignition).

In accordance with a more detailed embodiment of the embodiment of Figure 2, Figure 2 also illustrates apparatus 100 wherein pulse detonation engines 140 apply the thrust forces to rotor hub 110. The fuel/air mixtures are delivered to pulse detonation engines 140 through internal passages in rotor hub 110 and in a rotor shaft (not shown). In some embodiments, depending on the space available and on the particular fuel used, detonation occurs in the internal passages. In other embodiments, detonation occurs in structures external to the rotor shaft and to rotor hub 110. Similarly, in some internally aspirated embodiments, air is introduced into the internal passages to form the fuel/air mixture; in other externally aspirated embodiments, the fuel/air mixture is first formed external to the rotor shaft and to rotor hub 110. In some embodiments, a combination of internal and external aspiration is advantageous.

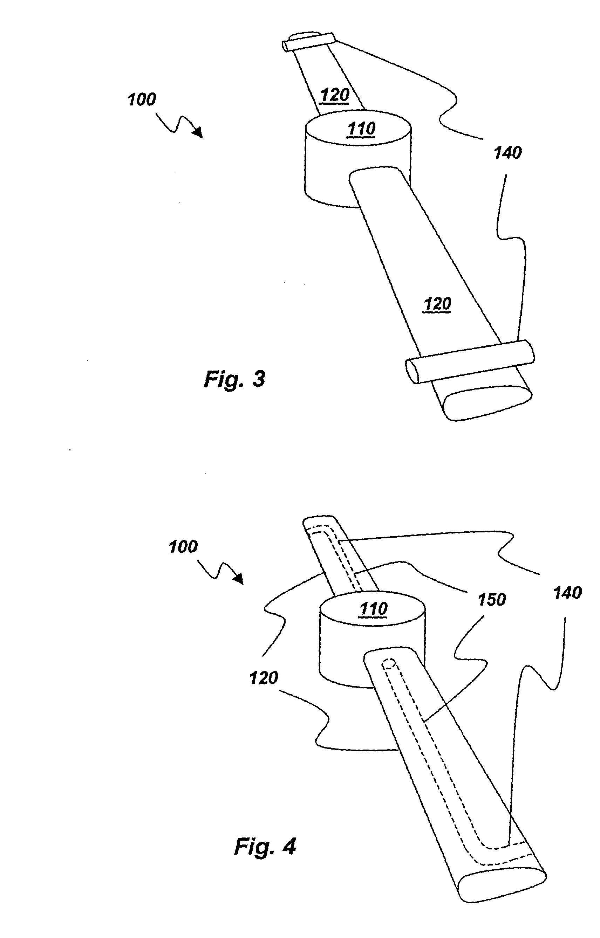

In accordance with another more detailed embodiment of the embodiment illustrated in Figure 2, Figure 3 illustrates a perspective drawing of apparatus 100 wherein pulse detonation engines 140 apply the thrust forces to respective ones of rotor blades 120. In contrast with the embodiment of Figure 2, additional internal passages are used through rotor blades 120 to deliver fuel or fuel/air mixtures. In comparison with the embodiment of Figure 2, embodiments of Figure 3 are internally aspirated, externally aspirated, or both.

In accordance with another, more detailed embodiment of the embodiment illustrated in Figure 2, Figure 4 illustrates a perspective drawing of apparatus 100 wherein pulse detonation engines 140 impulsively detonate the plurality of fuel/air mixtures in detonation chambers 150 disposed inside respective ones of rotor blades 120.

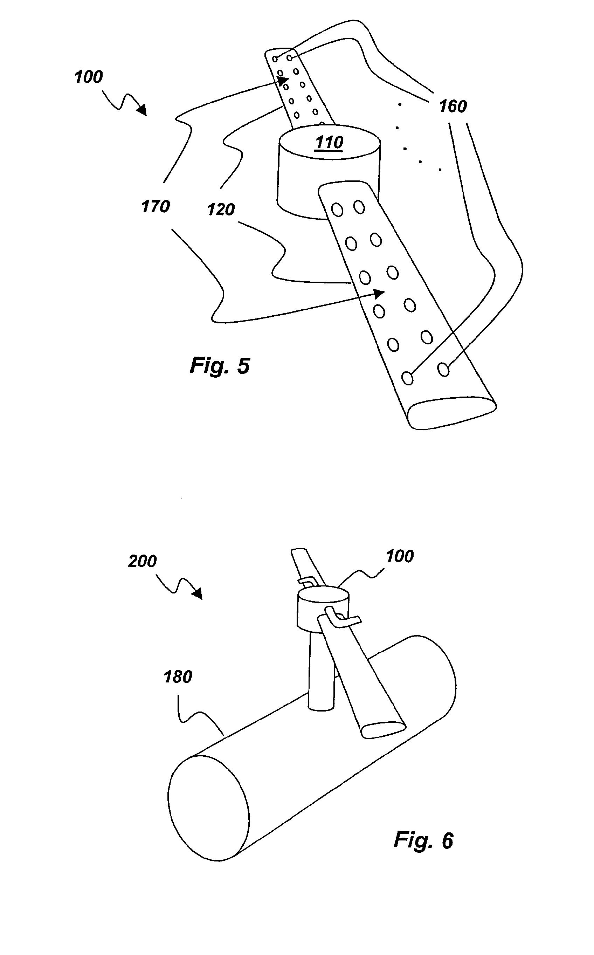

In accordance with another embodiment of the present invention, Figure 6 illustrates a perspective drawing of a rotorcraft 200 comprising a fuselage 180 and apparatus 100 as described above. Rotorcraft 200 comprises any vehicle relying on a rotor for lift, propulsion, or both. Examples of rotorcraft 200 include, without limitation, helicopters, fixed wing propeller aircraft, and airboats.

For the sake of good order, various aspects of the invention are set out in the following clauses:-
1. In apparatus (100) for lifting and propelling a rotorcraft, said apparatus (100) comprising:
   a rotor hub (110) adapted for applying lift and propulsive forces to said rotorcraft;
   a plurality of rotor blades (120) mechanically coupled to said rotor hub (110) to form a rotor assembly (130) and adapted for generating said lift and propulsive forces; and
   a plurality of pulse detonation engines (140) adapted for impulsively detonating a plurality of fuel/air mixtures to generate thrust forces and applying said thrust forces to said rotor assembly (130).
2 The apparatus (100) of clause 1 wherein said pulse detonation engines (140) are adapted for applying said thrust forces to said rotor hub (110).
3 The apparatus (100) of clause 1 wherein said pulse detonation engines (140) are adapted for applying said thrust forces to respective ones of said rotor blades (120).
4 The apparatus (100) of clause 1 wherein said pulse detonation engines (140) are adapted for impulsively detonating said plurality of fuel/air mixtures in detonation chambers (150) disposed inside respective ones of said rotor blades (120).
5 An apparatus (100) for lifting and propelling a rotorcraft, said apparatus (100) comprising:
   a rotor hub (110) adapted for applying lift and propulsive forces to said rotorcraft;
   a plurality of rotor blades (120) mechanically coupled to said rotor hub (110) to form a rotor assembly (130) and adapted for generating said lift and propulsive forces; and
   a plurality of pulse detonation engines (140) adapted for impulsively detonating a plurality of fuel/air mixtures to generate thrust forces and applying said thrust forces to said rotor assembly (130),
   said pulse detonation engines (140) being adapted for applying said thrust forces to respective ones of said rotor blades (120),
   said pulse detonation engines (140) being adapted for impulsively detonating said plurality of fuel/air mixtures in detonation chambers (150) disposed inside respective ones of said rotor blades (120).
6 A rotorcraft (200) comprising:
   a fuselage (180);
   a rotor hub (110) adapted for applying lift and propulsive forces to said fuselage (180);
   a plurality of rotor blades (120) mechanically coupled to said rotor hub (110) to form a rotor assembly (130) and adapted for generating said lift and propulsive forces; and
   a plurality of pulse detonation engines (140) adapted for impulsively detonating a plurality of fuel/air mixtures to generate thrust forces and applying said thrust forces to said rotor assembly (130).
7 The rotorcraft (200) of clause 6 wherein said pulse detonation engines (140) are adapted for applying said thrust forces to said rotor hub (110).
8 The rotorcraft (200) of clause 6 wherein said pulse detonation engines (140) are adapted for applying said thrust forces to respective ones of said rotor blades (120).
9 The rotorcraft (200) of clause 6 wherein said pulse detonation engines (140) are adapted for impulsively detonating said plurality of fuel/air mixtures in detonation chambers (150) disposed inside respective ones of said rotor blades (120).
10 A rotorcraft (200) comprising:
   a fuselage (180);
   a rotor hub (110) adapted for applying lift and propulsive forces to said fuselage (180);
   a plurality of rotor blades (120) mechanically coupled to said rotor hub (110) to form a rotor assembly (130) and adapted for generating said lift and propulsive forces; and
   a plurality of pulse detonation engines (140) adapted for impulsively detonating a plurality of fuel/air mixtures to generate thrust forces and applying said thrust forces to said rotor assembly (130),
   said pulse detonation engines (140) being adapted for applying said thrust forces to respective ones of said rotor blades (120),
   said pulse detonation engines (140) being adapted for impulsively detonating said plurality of fuel/air mixtures in detonation chambers (150) disposed inside respective ones of said rotor blades (120).
11 A method for lifting and propelling a rotorcraft, said method comprising:
   impulsively detonating a plurality of fuel/air mixtures in respective ones of a plurality of pulse detonation engines (140) to generate a plurality of thrust forces,
   applying said thrust forces to a rotor assembly (130),
   said rotor assembly (130) comprising a rotor hub (110) and a plurality of rotor blades (120) mechanically coupled thereto,
   said rotor blades (120) being adapted for generating lift and propulsive forces,
   said rotor hub (110) being adapted for applying said lift and propulsive forces to said rotorcraft.
12 The method of clause 11 wherein applying said thrust forces to said rotor assembly (130) comprises applying said thrust forces to said rotor hub (110).
13 The method of clause 11 wherein said step of applying said thrust forces to said rotor assembly (130) comprises applying said thrust forces to respective ones of said rotor blades (120).
14 The method of clause 11 wherein said step of impulsively detonating said plurality of fuel/air mixtures comprises impulsively detonating said fuel/air mixtures in detonation chambers (150) disposed inside respective ones of said rotor blades (120).
15 A method for lifting and propelling a rotorcraft, said method comprising:
   impulsively detonating a plurality of fuel/air mixtures in respective ones of a plurality of pulse detonation engines (140) to generate a plurality of thrust forces,
   applying said thrust forces to a rotor assembly (130),
   said rotor assembly (130) comprising a rotor hub (110) and a plurality of rotor blades (120) mechanically coupled thereto,
   said rotor blades (120) being adapted for generating lift and propulsive forces,
   said rotor hub (110) being adapted for applying said lift and propulsive forces to said rotorcraft,
   said step of applying said thrust forces to said rotor assembly (130) comprising applying said thrust forces to respective ones of said rotor blades (120),
   said step of impulsively detonating said plurality of fuel/air mixtures comprising impulsively detonating said fuel/air mixtures in detonation chambers (150) disposed inside respective ones of said rotor blades (120).

## Claims

1. In apparatus (100) for lifting and propelling a rotorcraft, said apparatus (100) comprising:
a rotor hub (110) adapted for applying lift and propulsive forces to said rotorcraft;
a plurality of rotor blades (120) mechanically coupled to said rotor hub (110) to form a rotor assembly (130) and adapted for generating said lift and propulsive forces; and
a plurality of pulse detonation engines (140) adapted for impulsively detonating a plurality of fuel/air mixtures to generate thrust forces and applying said thrust forces to said rotor assembly (130).

2. The apparatus (100) of claim 1 wherein said pulse detonation engines (140) are adapted for applying said thrust forces to said rotor hub (110).

3. The apparatus (100) of claim 1 wherein said pulse detonation engines (140) are adapted for applying said thrust forces to respective ones of said rotor blades (120).

4. An apparatus (100) for lifting and propelling a rotorcraft, said apparatus (100) comprising:
a rotor hub (110) adapted for applying lift and propulsive forces to said rotorcraft;
a plurality of rotor blades (120) mechanically coupled to said rotor hub (110) to form a rotor assembly (130) and adapted for generating said lift and propulsive forces; and
a plurality of pulse detonation engines (140) adapted for impulsively detonating a plurality of fuel/air mixtures to generate thrust forces and applying said thrust forces to said rotor assembly (130),
said pulse detonation engines (140) being adapted for applying said thrust forces to respective ones of said rotor blades (120),
said pulse detonation engines (140) being adapted for impulsively detonating said plurality of fuel/air mixtures in detonation chambers (150) disposed inside respective ones of said rotor blades (120).

5. A rotorcraft (200) comprising:
a fuselage (180);
a rotor hub (110) adapted for applying lift and propulsive forces to said fuselage (180);
a plurality of rotor blades (120) mechanically coupled to said rotor hub (110) to form a rotor assembly (130) and adapted for generating said lift and propulsive forces; and
a plurality of pulse detonation engines (140) adapted for impulsively detonating a plurality of fuel/air mixtures to generate thrust forces and applying said thrust forces to said rotor assembly (130).

6. The rotorcraft (200) of claim 5 wherein said pulse detonation engines (140) are adapted for applying said thrust forces to said rotor hub (110).

7. A rotorcraft (200) comprising:
a fuselage (180);
a rotor hub (110) adapted for applying lift and propulsive forces to said fuselage (180);
a plurality of rotor blades (120) mechanically coupled to said rotor hub (110) to form a rotor assembly (130) and adapted for generating said lift and propulsive forces; and
a plurality of pulse detonation engines (140) adapted for impulsively detonating a plurality of fuel/air mixtures to generate thrust forces and applying said thrust forces to said rotor assembly (130),
said pulse detonation engines (140) being adapted for applying said thrust forces to respective ones of said rotor blades (120),
said pulse detonation engines (140) being adapted for impulsively detonating said plurality of fuel/air mixtures in detonation chambers (150) disposed inside respective ones of said rotor blades (120).

8. A method for lifting and propelling a rotorcraft, said method comprising:
impulsively detonating a plurality of fuel/air mixtures in respective ones of a plurality of pulse detonation engines (140) to generate a plurality of thrust forces,
applying said thrust forces to a rotor assembly (130),
said rotor assembly (130) comprising a rotor hub (110) and a plurality of rotor blades (120) mechanically coupled thereto,
said rotor blades (120) being adapted for generating lift and propulsive forces,
said rotor hub (110) being adapted for applying said lift and propulsive forces to said rotorcraft.

9. The method of claim 8 wherein applying said thrust forces to said rotor assembly (130) comprises applying said thrust forces to said rotor hub (110).

10. A method for lifting and propelling a rotorcraft, said method comprising:
impulsively detonating a plurality of fuel/air mixtures in respective ones of a plurality of pulse detonation engines (140) to generate a plurality of thrust forces,
applying said thrust forces to a rotor assembly (130),
said rotor assembly (130) comprising a rotor hub (110) and a plurality of rotor blades (120) mechanically coupled thereto,
said rotor blades (120) being adapted for generating lift and propulsive forces,
said rotor hub (110) being adapted for applying said lift and propulsive forces to said rotorcraft,
said step of applying said thrust forces to said rotor assembly (130) comprising applying said thrust forces to respective ones of said rotor blades (120),
said step of impulsively detonating said plurality of fuel/air mixtures comprising impulsively detonating said fuel/air mixtures in detonation chambers (150) disposed inside respective ones of said rotor blades (120).
